# EUROPÄISCHE PATENTSCHRIFT

(11) **EP 3 400 778 B1**
(45) Veröffentlichungstag und Bekanntmachung des Hinweises auf die Patenterteilung: **22.07.2020**
(21) Anmeldenummer: 18159733.7
(22) Anmeldetag: 02.03.2018
(51) Int. Cl.: A01D 41/127, A01D 43/08

(54) **VERFAHREN ZUM BETREIBEN EINER SELBSTFAHRENDEN ERNTEMASCHINE**
METHOD FOR OPERATING A SELF-PROPELLED HARVESTER
PROCÉDÉ DE FONCTIONNEMENT D'UNE MOISSONNEUSE AUTONOME

(30) Priorität: 12.05.2017 DE 102017110341
(43) Veröffentlichungstag der Anmeldung: 14.11.2018
(73) Patentinhaber: CLAAS Selbstfahrende Erntemaschinen GmbH, 33428 Harsewinkel (DE)
(72) Erfinder: Look, Stefan, 48231 Warendorf (DE); Grove, Carsten, 48361 Beelen (DE); Lahmann, Dirk, 33790 Halle/Westf. (DE); Pollklas, Manfred, 33378 Rheda-Wiedenbrück (DE)
(74) Vertreter: CLAAS Gruppe

(56) Entgegenhaltungen:
- EP-A1- 1 576 870
- EP-A1- 2 885 961
- CN-A- 101 512 198
- DE-A1-102009 028 175

## Beschreibung

Die vorliegende Erfindung betrifft ein Verfahren zum Betreiben einer selbstfahrenden Erntemaschine, insbesondere eines Feldhäckslers, gemäß dem Oberbegriff des Anspruchs 1. weiterhin betrifft die vorliegende Erfindung eine Steuerungseinrichtung für eine selbstfahrende Erntemaschine sowie eine selbstfahrende Maschine.

Erntemaschinen sind mit einem Vorsatzgerät ausgestattet, welches dazu dient, beim Durchfahren eines Bestandes auf einem abzuernten Feld Erntegut aufzunehmen und einer nachgeordneten Einzugsvorrichtung zuzuführen. Die Erntemaschine fährt über ein Feld, um beispielsweise einen gewachsenen Pflanzenbestand (typischerweise Mais) zu ernten oder, nach einer Grasmahd, den in Form von Schwaden auf dem Feldboden abgelegten Pflanzenbestand aufzunehmen. So wird mittels einer als Feldhäcksler ausgeführten Erntemaschine gemähtes Erntegut wie Anwelkgras, Grünfutter und dergleichen, welches vorzugsweise für eine wirtschaftliche Aufnahme zuvor in Schwaden zusammengeführt worden ist, von einem als Pick-up ausgeführten Vorsatzgerät aufgenommen. Im Allgemeinen sind die Schwaden linienförmig mit im Wesentlichen gleichen Abstand zueinander auf dem Feld abgelegt. Mit dem Erreichen des Endes eines Schwads führt die Erntemaschine einen Wendevorgang zum Wiedereinfahren in den nächsten Schwad aus, wofür der Pflanzenbestand temporär verlassen wird. Beim temporären Verlassen des Pflanzenbestandes wird ein zumindest dem Antrieb von Vorsatzgerät und Einzugsvorrichtung dienender Verbrennungsmotor automatisch angesteuert, für die Dauer des Wendevorganges eine Drehzahlabsenkung vorzunehmen. Dies dient insbesondere der Einsparung von Kraftstoff sowie der Verschleißreduzierung.

Aus der EP 1 576 870 B1 ist ein Verfahren zum Betreiben einer als Feldhäcksler ausgeführten Erntemaschine bekannt. Gemäß dem Verfahren wird das Vorsatzgerät der Erntemaschinen immer dann, wenn das Vorsatzgerät von einer bodennahen Arbeits- und Betriebsposition in eine zumindest teilweise angehobene Vorgewendeposition überführt wird, von einer hohen Betriebsdrehzahl auf eine wesentlich reduzierte Leerlaufdrehzahl heruntergefahren. Dies erfolgt entsprechend auch für die Betriebsdrehzahl der Einzugsvorrichtung, wobei diese gegenüber dem Vorsatzgerät zeitverzögert reduziert wird.

Durch das automatische Einschalten der Motordrehzahlreduzierung am Vorgewende kann es zu kritischen Maschinensituation kommen, wenn sich noch Erntegut im Vorsatzgerät befindet und dieses von der Einzugsvorrichtung erfasst wird, während die Motordrehzahl bereits reduziert worden ist. Dies kann zu einem Abwürgen des Verbrennungsmotors und im schlimmsten Fall zum Verstopfen der Erntemaschine führen.

Somit ist es Aufgabe der vorliegenden Erfindung, ein Verfahren zum Betreiben einer Erntemaschine der eingangs genannten Art bereitzustellen, welches die Nachteile des Standes der Technik nicht aufweist.

Diese Aufgabe wird erfindungsgemäß durch ein Verfahren mit den Merkmalen des Anspruch 1, eine Steuerungseinrichtung gemäß Anspruch 8 sowie eine selbstfahrende Erntemaschine gemäß Anspruch 9 gelöst.

Gemäß dem Anspruch 1 wird ein Verfahren zum Betreiben einer selbstfahrenden Erntemaschine, insbesondere eines Feldhäckslers, vorgeschlagen, von der mittels eines Vorsatzgerätes beim Durchfahren eines Pflanzenbestandes auf einem abzuerntenden Feld Erntegut aufgenommen wird. Das von dem Vorsatzgerät aufgenommene Erntegut wird einer nachgeordneten Einzugsvorrichtung zugeführt. Während eines Erntevorgangs wird der Pflanzenbestand temporär verlassen, insbesondere um einen Wendevorgang zum Wiedereinfahren in den Pflanzenbestand durchzuführen, wobei beim temporären Verlassen des Pflanzenbestandes ein zumindest dem Antrieb von Vorsatzgerät und Einzugsvorrichtung dienender Verbrennungsmotor automatisch angesteuert wird, für die Dauer des temporären Verlassens des Bestandes eine Drehzahlabsenkung vorzunehmen. Um zu verhindern, dass in der Einzugsvorrichtung befindliches Erntegut zu einem Abwürgen des Motors führt, wird erfindungsgemäß vorgeschlagen, dass beim Verlassen des Pflanzenbestandes die Einzugsvorrichtung automatisch abgeschaltet wird, bevor die Drehzahlabsenkung des Verbrennungsmotors initiiert wird, während das Vorsatzgerät eingeschaltet bleibt. Auf diese Weise wird ein ungewolltes Einziehen von Erntegut durch die Einzugsvorrichtung bei aktiver Drehzahlabsenkung des Verbrennungsmotors verhindert. Damit einhergehend wird vermieden, dass es zu kritischen Maschinensituationen, wie einem Abwürgen des Verbrennungsmotors oder einem Verstopfen der Erntemaschinen, kommt. Darüber hinaus lassen sich durch das erfindungsgemäße Verfahren Ernteverluste während eines temporären Verlassen des Bestandes beim Aus- und Einfahren vermeiden oder zumindest deutlich reduzieren, welche darauf zurückzuführen sind, dass ein Abfuhrgespann, bestehend aus einem Traktor und einem Transportanhänger oder einem Lastkraftwagen, sich während des Wendevorganges nicht unterhalb einer Erntegut übertragenden Einrichtung die Erntemaschine befindet. Ein weiterer Vorteil besteht darin, dass bei einer als Feldhäcksler ausgeführten Erntemaschine das Auftreten von Überlängen im Erntegut, welche auf eine unzureichende Vorbereitung in der Einzugsvorrichtung wegen zu geringer Erntegut Masse zurückzuführen ist, beim Auslauf aus dem Pflanzenbestand vermieden werden kann.

Bevorzugt kann vorgesehen sein, dass die Antriebsdrehzahl des Vorsatzgerätes abgesenkt wird. Dadurch, dass das Vorsatzgerät mit einer niedrigen Antriebsdrehzahl weiterbetrieben wird, kann sichergestellt werden, dass sich Dritte von dem Vorsatzgerät fernhalten, sodass eine mögliche Verletzungsgefahr minimiert wird.

Zur automatisierten Ansteuerung von Vorsatzgerät, Einzugsvorrichtung und Verbrennungsmotor kann vorgesehen sein, dass ein Passieren von Bestandsgrenzen des Pflanzenbestandes sensorisch erfasst wird. Dies kann beispielsweise mittels einer optischen Sensorik erfolgen, durch welche der Bereich vor dem Vorsatzgerät optisch erfasst wird. Von der optischen Sensorik erfasste Daten können ausgewertet werden, um zu bestimmen ob sich die Erntemaschine noch im Pflanzenbestand befindet oder diesen bereits verlassen hat. Ein weiteres Kriterium, um zu bestimmen, ob die Erntemaschine den Pflanzenbestand bereits verlassen hat, können das Anheben des Vorsatzgerätes sowie das Lenkverhalten darstellen, was sich durch mechanische und/oder elektrische Sensoren überwachen lässt.

Eine vorteilhafte Weiterbildung sieht vor, dass mittels eines Signalempfängers Positionssignale eines Positionsortungssystem empfangen und ausgewertet werden, um das Passieren von Bestandsgrenzen zu bestimmen. Anhand der Positionsbestimmung der Erntemaschinen lässt sich eine präzise Ansteuerung von Vorsatzgerät, Einzugsvorrichtung und Verbrennungsmotor darstellen. So lässt sich mittels der Positionsbestimmung feststellen, ob die Erntemaschinen in Vorbereitung des Erntevorganges an Außenkanten eines Feldes entlang fährt oder sich bereits im Pflanzenbestand bewegt. Entsprechend können sich durchzuführende Wendevorgänge der Erntemaschine voneinander unterscheiden. Insbesondere beim Abfahren der Außenkanten können Gutablagerungen im Vorsatzgerät auftreten, da die Erntemaschine in Eckbereichen des Feldes über diese hinaus fahren muss, um einen Wendevorgang durchführen zu können. Hierbei muss die Erntemaschine zurücksetzen und sich neu zum Pflanzenbestand ausrichten. Bei einem solchen Fahrmanöver ist die Erntemaschine stets schneller als das Abfuhrgespann, was zu einer Wartezeit führt. Aufgrund dieser Wartezeit kann die Motordrehzahlreduzierung einsetzen. Zur Vermeidung einer kritischen Maschinensituation wird erfindungsgemäß vor der Motordrehzahlreduzierung die Einzugsvorrichtung abgeschaltet und die Antriebsdrehzahl des Vorsatzgerätes reduziert.

Des Weiteren kann bei einem Verlassen des Pflanzenbestandes festgestellt werden, ob sich die Erntemaschine innerhalb von Feldgrenzen befindet, die ein abzuerntendes Feld markieren.

Insbesondere können das Abschalten der Einzugsvorrichtung und die Reduzierung der Antriebsdrehzahl des Vorsatzgerätes zeitabhängig durchgeführt werden. Dadurch kann auf unerwartete Stillstandzeiten reagiert werden.

Dabei kann vor einem wieder Einfahren in den Pflanzenbestand nach einem Wendevorgang automatisch zunächst die Drehzahl des Verbrennungsmotors angehoben werden und anschließend die Drehzahlen des Vorsatzgerätes und der Einzugsvorrichtung auf einen für den Erntevorgang voreingestellten Wert angehoben werden. Hierdurch wird eine Bedienperson der Erntemaschinen entlastet und kann sich vollständig auf das Fahrmanöver konzentrieren.

Weiterhin ist zur Lösung der eingangs gestellten Aufgabe eine Steuerungseinrichtung für eine selbstfahrende Erntemaschine vorgesehen, wobei die Steuerungseinrichtung zur Durchführung des Verfahrens nach einem der Ansprüche 1-7 eingerichtet ist. Die Steuerungseinrichtung ist zur betriebssituationsabhängigen Ansteuerung der Drehzahlen des Verbrennungsmotors sowie der Antriebsdrehzahlen des Vorsatzgerätes und der Einzugsvorrichtung eingerichtet. Hierfür kann die Steuerungseinrichtung unter anderem mit Drehzahlsensoren in Verbindung stehen, welche Signale bereitstellen, die die jeweiligen Drehzahlen repräsentieren. Die Steuerungseinrichtung ist zur Auswertung dieser Signale eingerichtet.

Des Weiteren wird die Aufgabe durch eine selbstfahrende Erntemaschine, insbesondere Feldhäcksler, mit einem Vorsatzgerät zum Aufnehmen von Erntegut und einer nachgeordneten Einzugsvorrichtung, welche mit einem Verbrennungsmotor trieblich verbunden sind, gelöst. Die Erntemaschine umfasst eine Steuerungseinrichtung zur Ansteuerung von Drehzahlen des Vorsatzgerätes, der Einzugsvorrichtung und des Verbrennungsmotors, wobei die Steuerungseinrichtung dazu eingerichtet ist, beim temporären Verlassen eines Pflanzenbestandes, insbesondere zur Durchführung eines Wendevorganges der Erntemaschinen, den Verbrennungsmotor automatisch in der Weise anzusteuern, dass für die Dauer des temporären Verlassens des Bestandes eine Drehzahlabsenkung vorgenommen wird. Um zu verhindern, dass noch in der Einzugsvorrichtung befindliches Erntegut wegen der automatischen Drehzahlabsenkung des Verbrennungsmotors zu einem Abwürgen des Motors führt, ist vorgesehen, dass die Steuerungseinrichtung weiter dazu eingerichtet ist, beim Verlassen des Feldes die Einzugsvorrichtung abzuschalten, bevor die Drehzahlabsenkung des Verbrennungsmotors initiiert wird, während das Vorsatzgerät eingeschaltet bleibt. Dadurch wird ein Abfördern von in der Einzugsvorrichtung verbliebenen Erntegutresten an ein nachgeordnetes Häckselaggregat vermieden.

Hierzu kann die Erntemaschine mechanische und/oder elektrische und/oder optische Sensoren umfassen, um zumindest das Verlassen eines Pflanzenbestandes zu bestimmen. Das jeweilige Verlassen des Pflanzenbestandes lässt sich unter anderem anhand eines abnehmenden Durchsatzes von Erntegut in der Einzugsvorrichtung bestimmen. Alternativ oder zusätzlich lässt sich das Verlassen des Pflanzenbestandes durch optische Sensoren bestimmen, da diese vorausschauend das Vorhandensein von Erntegut bestimmen können. Eine weitere Möglichkeit besteht in der Verwendung eines Sensors, insbesondere Signalempfängers, zur Positionsbestimmung, welcher Signale von einem Positionsortungssystem empfängt. Mittels in der Steuerungseinrichtung hinterlegter kartographischer Daten des jeweils zu bearbeitenden Feldes lässt sich die jeweilige Position der Erntemaschinen durch einen Abgleich mit den durch den Sensor von dem Positionsortungssystem empfangenen Signalen exakt bestimmen. Das jeweilige Passieren von Bestandgrenzen beim Ausfahren aus und dem Einfahren in den Pflanzenbestand lässt sich somit exakt bestimmen. Diese Informationen können von der Steuerungseinrichtung zu einer aufeinander abgestimmten Ansteuerung der Antriebsdrehzahlen von Vorsatzgerät, Einzugsvorrichtung und Verbrennungsmotor verwendet werden.

Vorteilhaft ist es, wenn die Antriebsdrehzahlen der Einzugsvorrichtung und des Vorsatzgerätes unabhängig voneinander ansteuerbar sind. So kann bei beispielsweise vorgesehen sein, einen mechanischen Antriebsstrang zwischen den Verbrennungsmotor und der Einzugsvorrichtung durch eine Kupplung oder dergleichen unterbrechbar zu gestalten. Bei einem hydraulischen Antrieb der Einzugsvorrichtung und des Vorsatzgerätes lassen sich diese individuell durch eine entsprechende Ansteuerung eines jeweiligen Hydromotors unabhängig voneinander ansteuern.

Die vorliegende Erfindung wird nachstehend anhand eines in den Zeichnungen dargestellten Ausführungsbeispieles näher erläutert.

Es zeigen:
- Fig. 1: einen Feldhäcksler in schematischer Seitenansicht bei der Erntefahrt;
- Fig. 2: einen Feldhäcksler sowie einen begleitenden Traktor, der einen Transportanhänger zieht, beim Anschneiden eines Feldes in schematischer Draufsicht;
- Fig. 3: eine schematische Darstellung eines abzuerntenden Feldes in einer Draufsicht.

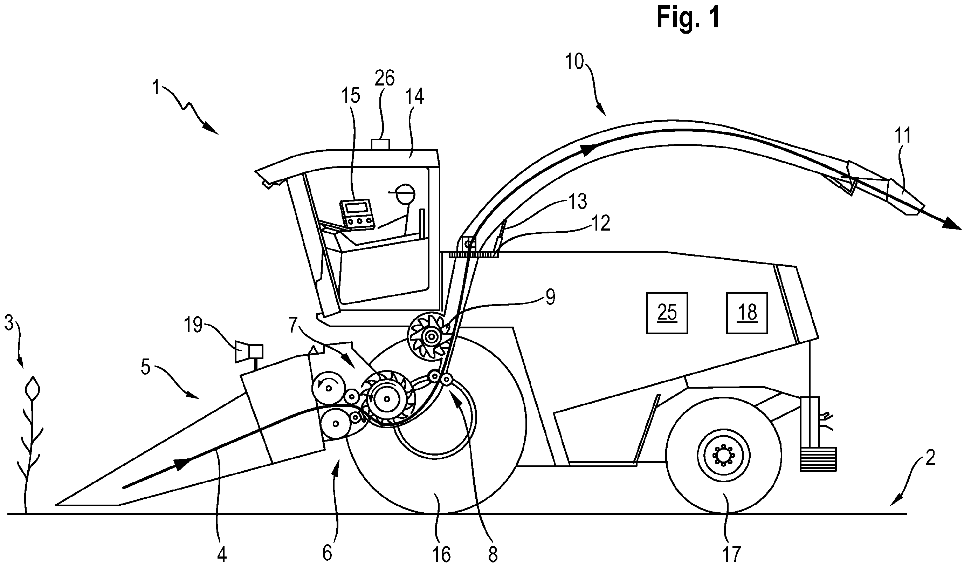

Fig. 1 zeigt eine erfindungsgemäße Erntemaschine in Form eines Feldhäckslers 1 in schematischer Ansicht von der Seite. Der Feldhäcksler 1 fährt über ein Feld 2, um beispielsweise einen gewachsenen Pflanzenbestand 3 (typischerweise Mais) zu ernten oder, nach einer Grasmahd, den in Form von Schwaden auf dem Feldboden abgelegten Pflanzenbestand 3 aufzunehmen.

Auf für sich bekannte Weise ist der Feldhäcksler 1 mit einem Vorsatzgerät 5 ausgestattet, um mit diesem den oberen Teil einer Maispflanze vom Feld zu trennen und dem Feldhäcksler 1 zur weiteren Bearbeitung als Erntegut 4 zuzuführen. Das so aufgenommene Erntegut 4 wird entlang der eingezeichneten, mit Pfeilen versehenen Linie durch den Feldhäcksler 1 gefördert, um anschließend auf ein (hier nicht dargestelltes) Transportfahrzeug überladen zu werden.

Dem Vorsatzgerät 5 bezogen auf die Gutstromrichtung nachgelagert (stromabwärts) befindet sich eine Einzugsvorrichtung 6. Die Einzugsvorrichtung 6 umfasst paarweise angeordnete Einzugswalzen, welche das Erntegut 4 vorpressen und mit einer definierten Geschwindigkeit einem nachgeordneten Häckselaggregat 7 zuführen. Das Häckselaggregat 7 ist mit einer rotierenden, mit Messern bestückten, Häckseltrommel ausgestattet, um das Erntegut 4 in Zusammenwirkung mit einer ruhenden Gegenschneide in Partikel gewünschter Schnittlänge zu zerkleinern. Das so gehäckselte Erntegut 4 gelangt durch einen unterhalb einer Fahrerkabine 14 nach hinten aufsteigenden Förderschacht durch eine (optionale) Konditioniereinrichtung 8, um dann von einem Auswurfbeschleuniger 9 auf eine zum Auswurf durch eine Überladeeinrichtung 10 geeignete Geschwindigkeit beschleunigt zu werden.

An dem Vorsatzgerät 5 kann weiterhin eine Selbstlenkeinrichtung 19 angeordnet sein, welche anhand einer Erfassung (hier: optisch per Kamera, kann aber auch mechanisch per Taster erfolgen) des vor dem Feldhäcksler 1 befindlichen Pflanzenbestands 3 eine automatische Lenkung des Feldhäckslers 1 relativ zu dem Pflanzenbestand 3 vornehmen kann. Dabei kann der Feldhäcksler 1 insbesondere mit einem definierbaren Seitenabstand zu gepflanzten Maisreihen gelenkt werden, um das Feld 2 entlang der Bepflanzungsreihen abzuernten.

Die Überladeeinrichtung 10 in Form eines sogenannten "Auswurfkrümmers" ist auf für sich bekannte Weise durch einen Höhenstellzylinder 13 in deren Höhe verstellbar und durch einen Drehkranz 12 um eine vertikale Drehachse seitlich schwenkbar. Am maschinenabgewandten Ende der Überladeeinrichtung 10 ist eine Auswurfklappe 11 vorgesehen, die ebenfalls schwenkbar ist, um einen Abwurfwinkel des ausgeworfenen Ernteguts 4 vorzugeben. Es sei angemerkt, dass der Feldhäcksler 1 in Fig. 1 aus Darstellungsgründen mit nach hinten geschwenkter Überladeeinrichtung 10 gezeigt ist. Bei normaler Erntefahrt (über ein bereits angeschnittenes Feld) ist die Überladeeinrichtung 10 üblicherweise seitlich mittels der Drehkranzes 12 verschwenkt, ragt also aus der Zeichnungsebene heraus (oder in diese hinein).

Ein heckseitig angeordneter Verbrennungsmotor 18 dient dem Antrieb der Arbeitsorgane, wie dem Vorsatzgerät 5 sowie der Einzugsvorrichtung 6, des Feldhäckslers 1 sowie dem Fahrantrieb der Vorderräder 16 und ggf. der Hinterräder 17 (bei Zuschaltung eines Allradantriebs) sowie zur Versorgung von sonstigen Funktionseinrichtungen.

In der Fahrerkabine 14 ist für einen Fahrer zugänglich eine Steuer-, Bedien- und Anzeigeeinrichtung 15 angeordnet, die mit den wesentlichen Funktionseinrichtungen des Feldhäckslers 1 in Signalverbindung steht, so dass der Fahrer über die Steuer-, Bedien- und Anzeigeeinrichtung 15 auf eine Vielzahl von an der Erntemaschine verfügbaren Funktionen zugreifen, insbesondere diese überwachen und steuern kann.

Weiterhin weist der Feldhäcksler 1 eine Steuerungseinrichtung 25 auf, welche der Ansteuerung der Antriebs- und Arbeitsaggregate dient, mit welchen die Steuerungseinrichtung 25 durch ein nicht näher dargestelltes Bussystem verbunden ist. So lässt sich die Drehzahl des als Antriebsaggregat ausgeführten Verbrennungsmotors 18 in Abhängigkeit von der jeweiligen Betriebssituation durch die Steuerungseinrichtung 25 ansteuern. Entsprechendes gilt zumindest für das Vorsatzgerät 5 sowie die Einzugsvorrichtung 6 als Arbeitsaggregate des Feldhäckslers 1. Hierzu steht die Steuerungseinrichtung 25 durch Signal- und Steuerleitungen unter anderem mit Drehzahlsensoren in Verbindung, um Daten zu empfangen und auszuwerten, welche die Drehzahlen des Verbrennungsmodus 18, des Vorsatzgerätes 5 und der Einzugsvorrichtung 6 repräsentieren. Darüber hinaus ist die Steuerungseinrichtung 25 mit einem Signalempfänger 26 verbunden, welcher zum Empfang von Positionssignalen eines Positionsortungssystems eingerichtet ist. Die von dem Signalempfänger 26 empfangenen Daten werden von der Steuerungseinrichtung 25 ausgewertet. Die Steuerungseinrichtung 25 ist zum Abgleich der empfangenen Positionssignale mit kartographischen Daten des jeweils zu bearbeitenden Feldes 2 eingerichtet.

Fährt ein Fahrer mit dem Feldhäcksler 1 auf ein neu zu bearbeitendes Feld, so muss der Fahrer den Feldhäcksler 1 zumindest bei der ersten Umrundung entlang der Außenkanten des Feldes auf besondere Weise einstellen. Unter anderem kann beispielsweise der Überladevorgang mittels der Überladeeinrichtung 10 aus Platzgründen nur nach hinten stattfinden, was im späteren Erntebetrieb im angeschnittenen Feld aufgrund der dabei auftretenden erschwerten Bedingungen (schlechtere Sichtbarkeit, höhere Wurfweite und damit verringerte Treffgenauigkeit) vermieden wird. Auch bei einer ersten Durchquerung eines Feldes ("Durchstechen") besteht die Notwendigkeit des Überladens nach hinten.

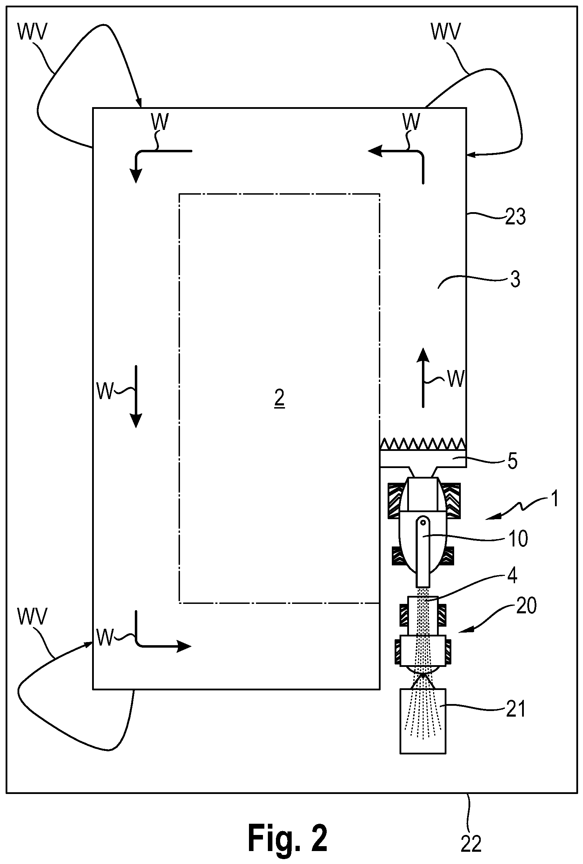

Fig. 2 veranschaulicht das erste Umrunden eines Feldes 2 anhand einer schematischen Draufsicht auf das Feld 2 und den Feldhäcksler 1 während der Grasernte. Die Kontur des Feldes 2 wird durch Feldgrenzen 22 definiert. Mit 23 sind Außenkanten des Pflanzenbestands 3 bezeichnet, entlang derer das Feld 2 erstmalig von dem Feldhäcksler 1 umrundet wird. Für eine bessere Veranschaulichung ist der Abstand der Feldgrenze 22 zur Außenkante 23 des Pflanzenbestandes 3 stark vergrößert dargestellt.

Das Feld 2 mit im Wesentlichen rechteckiger Grundfläche ist beispielhaft nach einer erfolgen Grasmahd dargestellt. Der Pflanzenbestand 3 in Form von gemähtem Gras ist als im Wesentlichen linienförmige Schwad auf dem Feld 2 abgelegt und wird von dem Feldhäcksler 1 mit einem als Pick-up ausgeführten Vorsatzgerät 5 aufgenommen. Damit das Feld 2 abgeerntet werden kann, muss der Feldhäcksler 1 das Feld 2 zunächst entlang dessen Außenkanten 23 umrunden, wie durch Wegpfeile W angedeutet. Dabei kann es zum Auftreten von Gutablagerungen in einem Teilbereich der Pick-up kommen, was insbesondere bei der ersten Runde entlang der Außenkanten 23 in Ecken der Fall ist, wenn der Feldhäcksler 1 über eine Ecke des Feldes 2 hinaus fährt, da der Kurvenradius zu klein ist. Hierfür wird das Vorsatzgerät 5 ausgehoben. Der Feldhäcksler 1 verlässt hierbei den Bereich des Feldes 2, auf dem die Schwad abgelegt ist, temporär. Die in den Ecken des Feldes 2 von dem Feldhäcksler 1 auszuführenden Wende- bzw. Rangiervorgänge sind durch Pfeile WV angedeutet.

Entsprechend muss sich der Feldhäcksler 1 nach einem solchen Wendevorgang WV wieder neu zu der aufzunehmenden Schwad ausrichten. Bei diesem Fahrmanöver ist der Feldhäcksler 1 immer deutlich schneller als ein Abfuhrgespann, ein von einem Traktor 20 gezogener Transportwagen 21 oder ein Lastkraftwagen, was zu einer Wartezeit des Feldhäckslers 1 führt. Während dieser Wartezeit setzt eine automatische Motordrehzahlreduzierung ein, die von der Steuerungseinrichtung 25 initiiert wird. Dabei wird die Drehzahl des Verbrennungsmotors 18 abgesenkt, um Kraftstoff zu einzusparen. Beim Durchführen des Wendevorganges WV können sich noch Gutablagerungen in der Pick-up befinden, welche von den Einzugswalzen der Einzugsvorrichtung 6 eingezogen werden können. Beim automatischen Einschalten der Motordrehzahlreduzierung in dieser Erntesituation kann es zu kritischen Maschinensituation, wie dem Abwürgen des Verbrennungsmotors 18, kommen, wenn sich noch Erntegut im Vorsatzgerät 5 befindet und dieses von der Einzugsvorrichtung 6 erfasst wird, nachdem die Motordrehzahl bereits reduziert worden ist. Hierbei kann es im schlimmsten Fall zum Verstopfen im Gutflussweg kommen, was ein zeitintensives Freiräumen des Feldhäckslers 1 nach sich zieht.

Um ein Abwürgen des Verbrennungsmotors 18 bzw. ein Auftreten von Verstopfungen wegen des im Einzugsbereich des Feldhäckslers 1 befindlichen Erntegutes zu vermeiden, ist vorgesehen, dass vor einer automatischen Motordrehzahlreduzierung des Verbrennungsmotors 18 die Einzugsvorrichtung 6 abgeschaltet wird, während das Vorsatzgerät 5 eingeschaltet bleibt. Dabei wird die Drehzahl des Vorsatzgerätes 5 auf ein Minimum reduziert, sodass der Betrieb des Vorsatzgerätes 5 für Dritte sichtbar ist. Auf diese Weise kann sichergestellt werden, dass Dritte sich nicht dem laufenden Vorsatzgerät 5 nähern, wodurch eine Verletzungsgefahr minimiert wird. Andererseits wird der Kraftstoffverbrauch reduziert. Darüber hinaus wird das Auftreten von Ernteverlusten vermieden, die darauf zurückzuführen sind, dass sich das Abfuhrgespann während des Wendevorganges WV nicht unterhalb der Übergabevorrichtung 10 befindet, während in der Einzugsvorrichtung 6 verbliebene Erntegutreste während des Wendevorganges WV von dieser weiter gefördert werden. Die Ansteuerung des Verbrennungsmotors 18 sowie des Vorsatzgerätes 5 und der Einzugsvorrichtung 6 erfolgt durch die hierzu eingerichtete Steuerungseinrichtung 25.

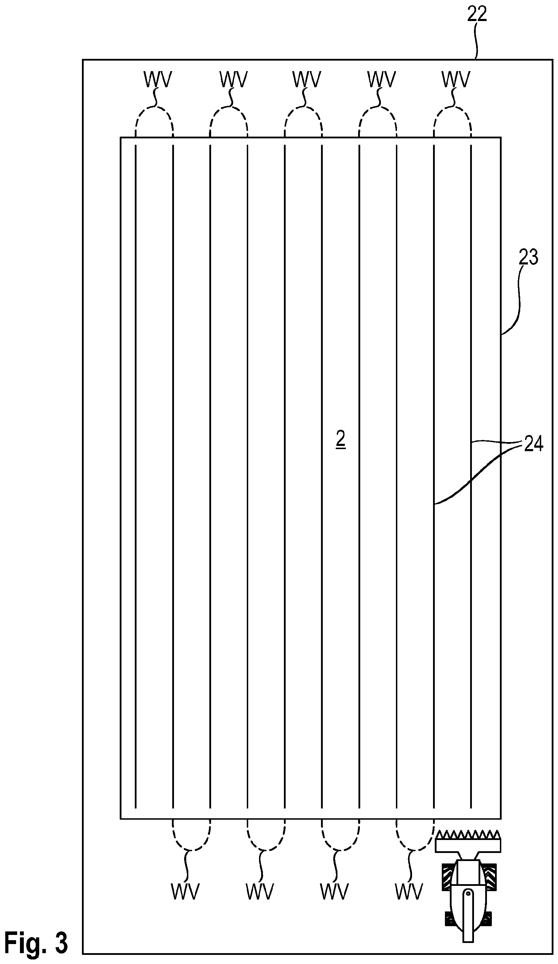

In Fig. 3 ist eine schematische Draufsicht auf das abzuerntende Feld 2 dargestellt. Der gemähte Pflanzenbestand 3 ist in Form von nebeneinander liegenden Schwaden 24 auf dem Feldboden abgelegt worden. Der Feldhäcksler 1 fährt in den Pflanzenbestand 3 ein und nimmt die Schwaden 24 auf. Am Ende eines jeden Schwads 24 führt der Feldhäcksler 1 außerhalb der Bestandgrenzen einen Wendevorgang WV durch, um den nächsten Schwad 24 aufnehmen zu können. Auch in diese Situation tritt das Phänomen auf, dass das Abfuhrgespann für den Wendevorgang WV mehr Zeit benötigt, als der Feldhäcksler 1. Entsprechend werden während dieser Wartezeit von der Steuerungseinrichtung 25 automatisch zunächst die Einzugsvorrichtung 6 abgeschaltet und die Drehzahl des Vorsatzgerätes 5 reduziert bevor die automatische Motordrehzahlreduzierung initiiert wird. Dabei wird die Drehzahl des Verbrennungsmotors 18 abgesenkt, um Kraftstoff zu einzusparen.

Das Passieren von Bestandsgrenzen durch den Feldhäcksler 1 während des Erntevorgangs lässt sich durch die Auswertung der mittels der als Kamera ausgeführten Selbstlenkeinrichtung 19 erfassten Daten und/oder den durch den Signalempfänger 26 empfangenen Positionssignale bestimmen. Die Steuerungseinrichtung 25 steuert in Abhängigkeit von der Auswertung der Daten bzw. Positionssignale den Verbrennungsmotor 18 sowie das Vorsatzgerät 5 und die Einzugsvorrichtung 6 in bereits beschriebener Weise an. Wird das Passieren der Bestandsgrenze aufgrund des Ausfahrens aus dem Bestand bestimmt, so wird die Einzugsvorrichtung 6 abgeschaltet, während das Vorsatzgerät 5 mit einer reduzierten Drehzahl weiter betrieben wird. Erst im Anschluss an diese Maßnahme wird die Drehzahlabsenkung des Verbrennungsmotors 18 eingeleitet.

Wird am Ende des Wendevorganges WV das erneute Erreichen der Bestandsgrenze bestimmt, so wird in einem ersten Schritt die Drehzahl des Verbrennungsmotors 18 auf ein für den Erntebetrieb vorgesehenes Niveau angehoben und in einem zweiten Schritt die Einzugsvorrichtung 6 wieder in Betrieb genommen. Ebenfalls wird die Drehzahl des Vorsatzgerätes 5 wieder auf eine für den Erntebetrieb voreingestellte Drehzahl angehoben.

### Bezugszeichenliste

- 1: Feldhäcksler
- 2: Feld
- 3: Pflanzenbestand
- 4: Erntegut
- 5: Vorsatzgerät
- 6: Einzugsvorrichtung
- 7: Häckselaggregat
- 8: Konditioniereinrichtung
- 9: Auswurfbeschleuniger
- 10: Überladeeinrichtung
- 11: Auswurfklappe
- 12: Drehkranz
- 13: Höhenstellzylinder
- 14: Fahrerkabine
- 15: Steuer-, Bedien-und Anzeigeeinrichtung
- 16: Vorderrad
- 17: Hinterrad
- 18: Verbrennungsmotor
- 19: Selbstlenkeinrichtung
- 20: Traktor
- 21: Transportanhänger
- 22: Feldgrenze
- 23: Außenkante
- 24: Schwad
- 25: Steuerungseinrichtung
- 26: Signalempfänger
- W: Wegpfeil
- WV: Wendevorgang

## Patentansprüche

1. Verfahren zum Betreiben einer selbstfahrenden Erntemaschine (1), von der mittels eines Vorsatzgerätes (5) beim Durchfahren eines Bestandes (3) auf einem abzuerntenden Feld (2) Erntegut (4) aufgenommen und einer nachgeordneten Einzugsvorrichtung (6) zugeführt wird, wobei während eines Erntevorgangs der Bestand (3) temporär verlassen wird, insbesondere um einen Wendevorgang (WV) zum Wiedereinfahren in den Bestand (3) durchzuführen, wobei beim temporären Verlassen des Bestandes (3) ein zumindest dem Antrieb von Vorsatzgerät (5) und Einzugsvorrichtung (6) dienender Verbrennungsmotor (18) automatisch angesteuert wird, für die Dauer des temporären Verlassen des Bestandes (3) eine Drehzahlabsenkung vorzunehmen, **dadurch gekennzeichnet, dass** beim Verlassen des Bestandes (3) die Einzugsvorrichtung (6) automatisch abgeschaltet wird, bevor die Drehzahlabsenkung des Verbrennungsmotors (18) initiiert wird, während das Vorsatzgerät (5) eingeschaltet bleibt.

2. Verfahren nach Anspruch 1, **dadurch gekennzeichnet, dass** die Antriebsdrehzahl des Vorsatzgerätes (5) abgesenkt wird.

3. Verfahren nach Anspruch 1 oder 2, **dadurch gekennzeichnet, dass** ein Passieren von Bestandsgrenzen des Bestandes (3) sensorisch erfasst wird.

4. Verfahren nach Anspruch 3, **dadurch gekennzeichnet, dass** mittels eines Signalempfängers (26) Positionssignale eines Positionsortungssystems empfangen und ausgewertet werden, um das Passieren von Bestandsgrenzen zu bestimmen.

5. Verfahren nach einem der vorangehenden Ansprüche, **dadurch gekennzeichnet, dass** bei einem Verlassen des Bestandes (3) festgestellt wird, ob sich die Erntemaschine (1) innerhalb von Feldgrenzen (22) befindet, welche ein abzuerntendes Feld (2) markieren.

6. Verfahren nach einem der vorangehenden Ansprüche, **dadurch gekennzeichnet, dass** das Abschalten der Einzugsvorrichtung (6) und die Drehzahlreduzierung des Vorsatzgerätes (5) zeitabhängig durchgeführt werden.

7. Verfahren nach einem der vorangehenden Ansprüche, **dadurch gekennzeichnet, dass** vor einem Wiedereinfahren in den Bestand (3) nach einem temporären Verlassens des Bestandes (3) insbesondere einem Wendevorgang (WV), automatisch zunächst die Drehzahlabsenkung des Verbrennungsmotors (18) aufgehoben wird und anschließend die Drehzahlen des Vorsatzgerätes (5) und der Einzugsvorrichtung (6) auf einen für den Erntevorgang voreingestellten Wert angehoben werden.

8. Steuerungseinrichtung (25) für eine selbstfahrende Erntemaschine (1), **dadurch gekennzeichnet, dass** die Steuerungseinrichtung (25) zur Durchführung des Verfahrens nach einem der Ansprüche 1 bis 7 eingerichtet ist.

9. Selbstfahrende Erntemaschine (1), insbesondere Feldhäcksler, mit einem Vorsatzgerät (5) zum Aufnehmen von Erntegut (4) und einer nachgeordneten Einzugsvorrichtung (6), welche mit einem Verbrennungsmotor (18) trieblich verbunden sind, sowie einer Steuerungsvorrichtung (25) zur Ansteuerung von Drehzahlen des Vorsatzgerätes (5), der Einzugsvorrichtung (6) und des Verbrennungsmotors (18), wobei die Steuerungseinrichtung (25) dazu eingerichtet ist, beim temporären Verlassen eines Bestandes (3), insbesondere zur Durchführung eines Wendevorganges (WV) der Erntemaschine (1), den Verbrennungsmotor (18) automatisch in der Weise anzusteuern, dass für die Dauer des temporären Verlassen des Bestandes (3) eine Drehzahlabsenkung vorgenommen wird, **dadurch gekennzeichnet, dass** die Steuerungseinrichtung (25) weiter dazu eingerichtet ist, beim Verlassen des Bestandes (3) die Einzugsvorrichtung (6) automatisch abzuschalten, bevor die Drehzahlabsenkung des Verbrennungsmotors (18) initiiert wird, während das Vorsatzgerät (5) eingeschaltet bleibt.

10. Selbstfahrende Erntemaschine (1) nach Anspruch 9, **dadurch gekennzeichnet, dass** die Erntemaschine (1) mechanische und/oder elektrische und/oder optische Sensoren umfasst, um zumindest das Verlassenen des Bestandes (3) zu bestimmen.

11. Selbstfahrende Erntemaschine (1) nach Anspruch 9 oder 10, **dadurch gekennzeichnet, dass** die Drehzahlen der Einzugsvorrichtung (6) und des Vorsatzgerätes (5) unabhängig voneinander ansteuerbar sind.

## Claims

1. A method of operating a self-propelled harvester (1) by which crop material (4) is picked up by means of an attachment (5) when passing through a crop stand (3) on a field (2) to be harvested and is fed to a downstream-disposed intake device (6), wherein during a harvesting operation the crop stand (3) is temporarily left, in particular to carry out a turning operation (WV) for travelling back into the crop stand (3) again, wherein upon temporarily leaving the crop stand (3) an internal combustion engine (18) serving at least for the drive of the attachment (5) and the intake device (6) is automatically controlled to implement a reduction in the speed of rotation for the duration of temporarily leaving the crop stand (3), **characterised in that** when leaving the crop stand (3) the intake device (6) is automatically shut down before the reduction in the speed of rotation of the internal combustion engine (18) is initiated while the attachment (5) remains switched on.

2. A method according to claim 1 **characterised in that** the drive speed of the attachment (5) is reduced.

3. A method according to claim 1 or claim 2 **characterised in that** passing through boundaries of the crop stand (3) is detected by sensor means.

4. A method according to claim 3 **characterised in that** position signals of a position locating system are received by means of a signal receiver (26) and evaluated to determine when passing through crop stand boundaries.

5. A method according to one of the preceding claims **characterised in that** when leaving the crop stand (3) it is determined whether the harvester (4) is within field boundaries (22) which mark a field (2) to be harvested.

6. A method according to one of the preceding claims **characterised in that** shut-down of the intake device (6) and the reduction in the speed of the attachment (5) are carried out in time-dependent relationship.

7. A method according to one of the preceding claims **characterised in that** before re-entering the crop stand (3) after temporarily leaving the crop stand (3), in particular a turning operation (WV), the reduction in the speed of rotation of the internal combustion engine (18) is firstly automatically cancelled and then the speeds of the attachment (5) and the intake device (6) are raised to a preset value for the harvesting operation.

8. A control apparatus (25) for a self-propelled harvester (1), **characterised in that** the control apparatus (25) is adapted to carry out the method according to one of claims 1 to 7.

9. A self-propelled harvester (1), in particular a forage harvester, comprising an attachment (5) for picking up crop material (4) and a downstream-disposed intake device (6) which are drivingly connected to an internal combustion engine (18), and a control apparatus (25) for controlling speeds of the attachment (5), the intake device (6) and the internal combustion engine (18), wherein the control apparatus (25) is adapted upon temporarily leaving a crop stand (3), in particular for performing a turning operation (WV) of the harvester (1), to automatically control the internal combustion engine (18) in such a way that a reduction in the speed of rotation is implemented for the duration of temporarily leaving the crop stand (3), **characterised in that** the control apparatus (25) is further adapted when leaving the crop stand (3) to shut down the intake device (6) automatically before the reduction in the speed of rotation of the internal combustion engine (18) is initiated while the attachment (5) remains switched on.

10. A self-propelled harvester (1) according to claim 9 **characterised in that** the harvester (1) includes mechanical and/or electrical and/or optical sensors for detecting at least leaving the crop stand (3).

11. A self-propelled harvester (1) according to claim 9 or claim 10 **characterised in that** the speeds of the intake device (6) and the attachment (5) are controllable independently of each other.

## Revendications

1. Procédé pour exploiter une machine de récolte automotrice (1), par laquelle du produit récolté (4) est ramassé au moyen un outil frontal (5) en traversant une culture (3) dans un champ à récolter (2) et est dirigé vers un dispositif d'amenée (6) disposé en aval, pendant une récolte la culture (3) étant abandonnée temporairement, en particulier pour réaliser une manœuvre de retournement (WV) pour repartir dans la culture (3), lors de l'abandon temporaire de la culture (3), un moteur à combustion interne (18) servant au moins à l'entraînement de l'outil frontal (5) et du dispositif d'amenée (6) étant automatiquement mis en marche, une baisse de régime étant effectuée pendant la durée de l'abandon temporaire de la culture (3), **caractérisé en ce que**, lors de l'abandon de la culture (3), le dispositif d'amenée (6) est mis à l'arrêt automatiquement avant que la baisse de régime du moteur à combustion interne (18) ne soit opérée, tandis que l'outil frontal (5) reste en marche.

2. Procédé selon la revendication 1, **caractérisé en ce que** la vitesse de rotation d'entraînement de l'outil frontal (5) est abaissée.

3. Procédé selon la revendication 1 ou 2, **caractérisé en ce qu'**un franchissement de limites de culture de la culture (3) est détecté au moyen de capteurs.

4. Procédé selon la revendication 3, **caractérisé en ce que**, au moyen d'un récepteur de signaux (26), des signaux de position d'un système de repérage de position sont reçus et analysés pour déterminer le franchissement de limites de culture.

5. Procédé selon une des revendications précédentes, **caractérisé en ce que**, lors un abandon de la culture (3), on regarde si la machine de récolte (1) se trouve à l'intérieur de limites de champ qui délimitent un champ à récolter (2).

6. Procédé selon une des revendications précédentes, **caractérisé en ce que** la mise à l'arrêt du dispositif d'amenée (6) et la réduction de vitesse de rotation de l'outil frontal (5) sont réalisées en fonction du temps.

7. Procédé selon une des revendications précédentes, **caractérisé en ce que**, avant de repartir dans la culture (3) après un abandon temporaire de la culture (3), en particulier après une manœuvre de retournement (WV), la baisse de régime du moteur à combustion interne (18) est d'abord supprimée automatiquement et, ensuite, les vitesses de rotation de l'outil frontal (5) et du dispositif d'amenée (6) sont portées à une valeur préréglée pour la récolte.

8. Équipement de commande (25) pour une machine de récolte automotrice (1), **caractérisé en ce que** l'équipement de commande (25) est agencé pour mettre en œuvre le procédé selon une des revendications 1 à 7 .

9. Machine de récolte automotrice (1), en particulier ensileuse, comprenant un outil frontal (5) pour ramasser du produit récolté (4) et comprenant un dispositif d'amenée (6) disposé en aval, lequel est relié de manière motrice à un moteur à combustion interne (18), ainsi que comprenant un dispositif de commande (25) pour commander des vitesses de rotation de l'outil frontal (5), du dispositif d'amenée (6) et du moteur à combustion interne (18), l'équipement de commande (25) étant agencé pour commander automatiquement le moteur à combustion interne (18) en cas d'abandon temporaire d'une culture (3), en particulier pour réaliser une manœuvre de retournement (WV) de la machine de récolte (1), de façon à effectuer une baisse de régime pendant la durée de l'abandon temporaire de la culture (3), **caractérisée en ce que** l'équipement de commande (25) est agencé, en outre, pour mettre automatiquement à l'arrêt le dispositif d'amenée (6) lors de l'abandon de la culture (3) avant que la baisse de régime du moteur à combustion interne (18) ne soit opérée, tandis que l'outil frontal (5) reste en marche.

10. Machine de récolte automotrice (1) selon la revendication 9, **caractérisée en ce que** la machine de récolte (1) inclut des capteurs mécaniques et/ou électriques et/ou optiques afin de détecter au moins l'abandon de la culture (3).

11. Machine de récolte automotrice selon la revendication 9 ou 10, **caractérisée en ce que** les vitesses de rotation du dispositif d'amenée (6) et de l'outil frontal (5) sont commandables indépendamment l'une de l'autre.
